# EUROPEAN PATENT SPECIFICATION

(11) **EP 1 099 522 B1**
(45) Date of publication and mention of the grant of the patent: **21.03.2007**
(21) Application number: 00114208.2
(22) Date of filing: 03.07.2000
(51) Int. Cl.: B27C 9/04, B27M 3/08, B23B 39/16, B23Q 37/00, B23Q 39/02

(54) **Drilling-milling machine for machining panels and the like**
Bohr-Fräs-Werkzeugmaschine zum Bearbeiten von Platten, oder dgl.
Perceuse-fraiseuse pour usiner des panneaux, ou analogues

(30) Priority: 12.11.1999 IT MI992369
(43) Date of publication of application: 16.05.2001
(73) Proprietor: Alberti Vittorio S.p.A., 20063 Cernusco sul Naviglio, Milano (IT)
(72) Inventor: Alberti, Luigi, 20063 Cernusco sul Naviglio (IT)
(74) Representative: Cicogna, Franco

(56) References cited:
- DE-A- 3 024 701
- GB-A- 1 009 685
- US-A- 4 945 958
- US-A- 5 720 090

## Description

### BACKGROUND OF THE INVENTION

The present invention relates to a drilling-milling machine, specifically designed for machining panels and the like.

As is known, panels are conventionally machined by using panel processing machines including a plurality of machining tools, specifically designed for performing suitable milling and drilling working operations.

For performing the above mentioned machining operations, multiple drive assembly are moreover provided, arranged on slides which can be slidably driven along one or two cartesian axes

The above mentioned apparatus, on the other hand, are affected by some problems in performing the broad range of machining operations usually required, since the machining tools thereof cannot be properly driven in an optimum manner.

A further problem is that the prior machines of the above mentioned types are usually of very complex construction and cannot perform very accurate machining operations.

The Document DE-A-30 24 701 discloses a machine in accordance with the preamble of the claim.

### SUMMARY OF THE INVENTION

Accordingly, the aim of the present invention is to overcome the above mentioned drawbacks, by providing a drilling-milling machines, specifically designed for machining panels and the like, comprising a plurality of machining tools, which can be independently driven from one another and can be anyhow properly arranged with respect to a panel being machined.

Within the scope of the above mentioned aim, a main object of the present invention is to provide such a drilling-milling machine allowing to perform highly automatized processing operations, by simply exploiting a drive from an operating or driving head thereof.

Another object of the present invention is to provide such a drilling-milling machine which, owing to its specifically designed constructional features, is very reliable and safe in operation.

Yet another object of the present invention is to provide such a drilling-milling machine specifically designed for machining panels and the like, which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a drilling-milling machine, specifically designed for machining panels and the like, according to the claim.

### BRIEF DESCRIPTION OF THE DRAWINGS

Further characteristics and advantages of the present invention will become more apparent hereinafter from the following detailed disclosure of a preferred, though not exclusive, embodiment of a drilling-milling machine specifically designed for machining panels and the like, and being illustrated, by way of an indicative, but not limitative, example in the accompanying drawings, where:

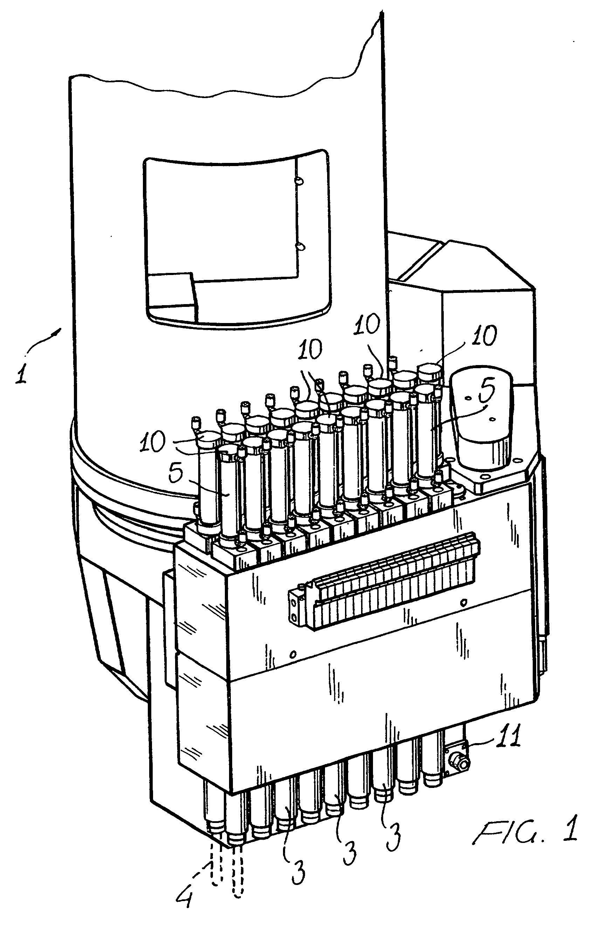

Figure 1 is a schematic perspective view illustrating the operating head of the drilling-milling machine according to the present invention;

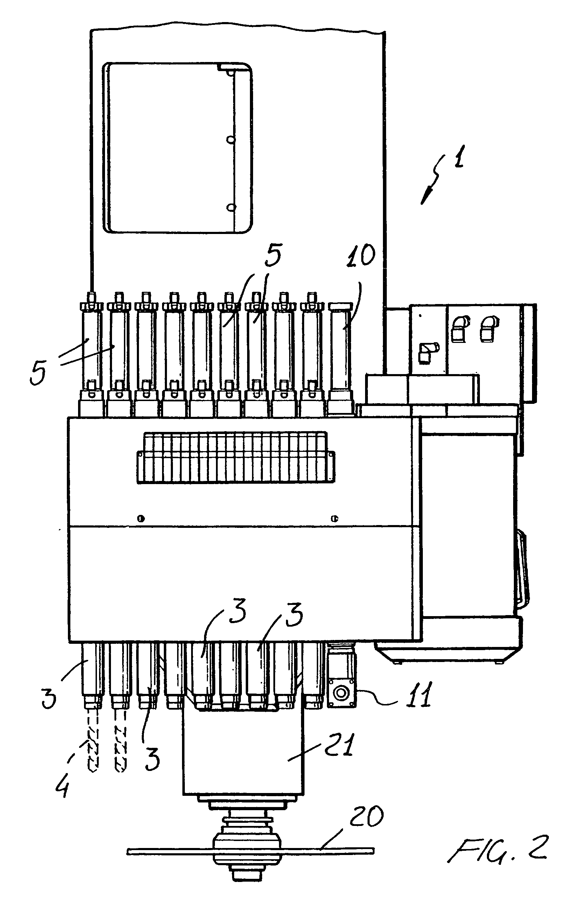

Figure 2 is a side elevation view illustrating the operating head;

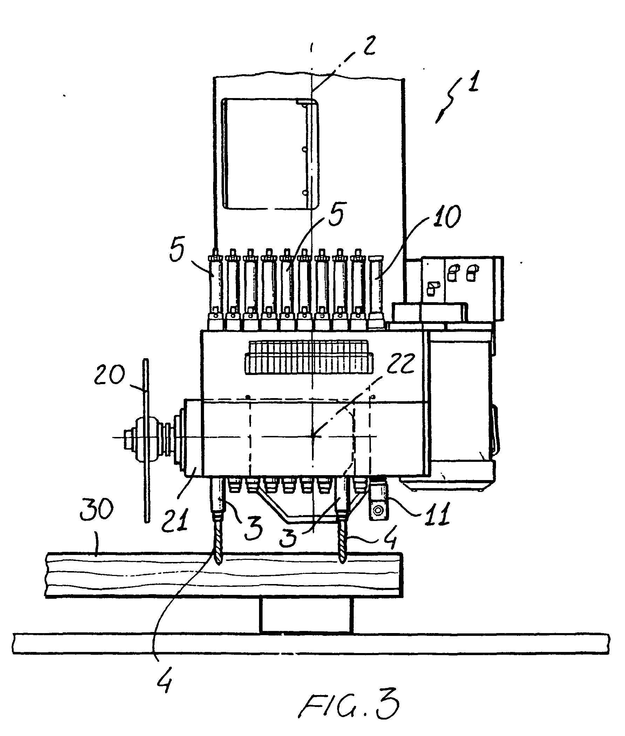

Figure 3 illustrates the operating head during vertical drilling operations;
Figure 4 illustrates the operating head during horizontal drilling operations; and

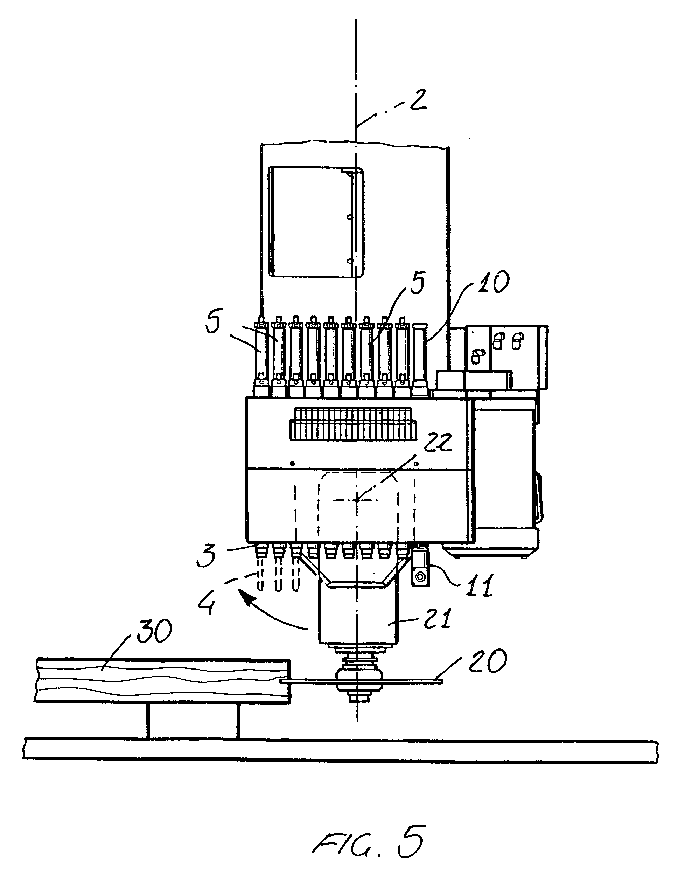

Figure 5 illustrates the operating head during edge milling operations.

### DESCRIPTION OF THE PREFERRED EMBODIMENTS

With reference to the number references of the above mentioned figures, the drilling-milling machine, specifically designed for drilling panels and the like, according to the present invention, comprises a bearing framework, supporting an operating or working head, generally indicated by the reference number 1, including drive means for providing a rotary drive about a vertical axis 2.

Further drive means for providing a translation drive along a horizontal axis and a translation drive along the vertical axis 2 are moreover provided.

As shown, the operating head 1 supports a plurality of vertical drilling mandrels 3 which, according to a known arrangement, are located along two parallel rows and support a plurality of vertical drilling drills, indicated by the reference number 4.

The vertical drilling mandrels 3 are driven by vertical driving cylinder 5 which are correspondingly provided axially aligned with the related mandrels.

Adjoining the vertical cylinder 5 for driving the vertical mandrels, is provided at least a cylinder 10 for driving a horizontal drilling assembly 11, adjoining the vertical drilling mandrels 3.

The disclosed mandrel assembly, owing to its connection to the operating head, can be arranged with respect to the panel being processed 30 with any set arrangements.

The horizontal drilling, in particular, can be easily carried out by exploiting the translation movement of the head along the horizontal axis.

Moreover, since the operating head can be turned about a vertical axis, it will allow the possibility of easily machining vertical holes having any desired orientations.

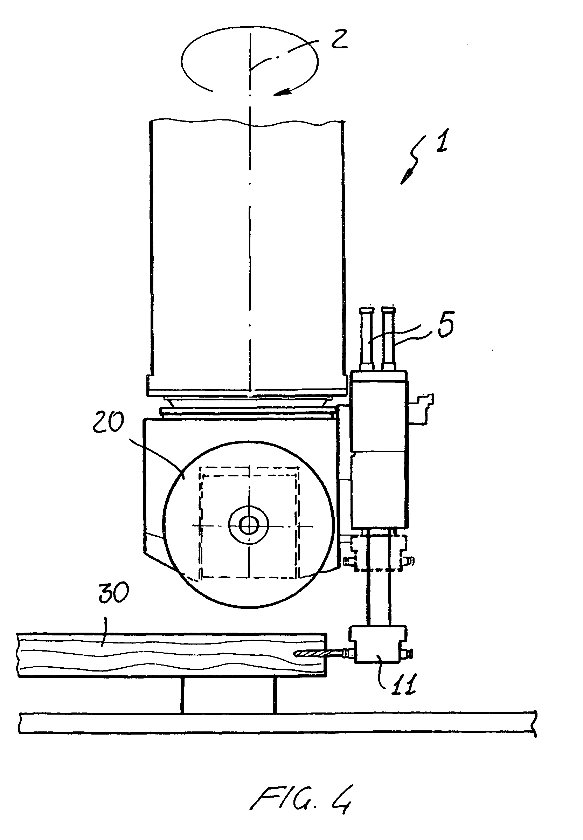

If the panel must be subjected to milling operations, then the milling tool 20 will be arranged as shown in Figure 4, and the drills being withdrawn in order not to interfere thereagainst.

On the other hand, if a side edge must be milled, then the supporting body 21 of the milling tool will be turned about the horizontal axis 22 thereby arranging the milling tool with a vertical axis and with the possibility of adjusting the translation height of the operating head.

Likewise, the working penetration of the milling tool will be achieved by causing the operating head to translate about the horizontal axis.

Thus, the above disclosed apparatus provides a very flexible operating head allowing to perform the desired machining operations, by exploiting the operating head drive, thereby simplifying the construction of the several operating assembly.

Moreover, the possibility of causing the milling tool to swing, and therewith the attachment body, about a horizontal axis, would allow to perform two different types of machining operations, i.e. being possible to arrange the milling tool in a not interfering position, as the drilling drills are driven.

From the above disclosure it should be apparent that a very flexible machine has been provided.

The invention, as disclosed, is susceptible to several modifications and variations all of which will come within the scope of the invention as defined in the claim.

Moreover, all the constructional details can be replaced by other technically equivalent elements.

In practicing the invention, the used materials, as well as the contingent size and shapes can be any, according to requirements.

## Claims

1. A drilling-milling machine for machining panels, comprising, on a bearing framework, an operating head (1) including drive means for providing a rotary drive about a vertical axis (2), a translation drive along a horizontal axis and a further translation drive along a vertical axis, **characterized in that** said operating head (5) supports a plurality of vertical drilling mandrels (3), at least one horizontal drilling mandrels (11) arranged adjoining the vertical drilling mandrels (3) and being driven by a respective vertical cylinder (10), an attachment body (21) rotatively coupled to said operating head and adapted to swing about a horizontal axis, said attachment body supporting a milling mandrel, and **in that** said vertical drilling mandrels (3) supported by said head (1) are arranged with an adjoining relationship each of said vertical drilling mandrels (3) being independently driven by a respective vertical pneumatic cylinder (5) axially aligned therewith.

## Patentansprüche

1. Bohr-Fräs-Werkzeugmaschine zur Bearbeitung von Platten, die auf einem Lagerrahmenwerk einen Bearbeitungskopf (1) umfasst, der Antriebsmittel zur Bereitstellung eines Drehantriebs um eine vertikale Achse (2), eines Übersetzungsantriebs längs einer horizontalen Achse und eines weiteren Übersetzungsantriebs längs einer vertikalen Achse aufweist, **dadurch gekennzeichnet, dass** der Bearbeitungskopf (5) mehrere vertikale Bohrspindeln (3), mindestens eine horizontale Bohrspindel (11), die benachbart zu den vertikalen Spindeln (3) angeordnet ist und durch einen zugehörigen vertikalen Zylinder (10) angetrieben wird, einen Zusatzgerätekörper (21), der drehbar an den Bearbeitungskopf gekoppelt und angepasst ist, um um eine horizontale Achse zu schwingen, aufnimmt, wobei der Zusatzgerätekörper eine Frässpindel aufnimmt und dass die vertikalen Bohrspindeln (3), die in dem Kopf (1) aufgenommen sind, in einer nebeneinanderliegenden Zuordnung angeordnet sind und jede der vertikalen Bohrspindeln (3) unabhängig durch einen zugehörigen vertikalen Pneumatikzylinder (5) angetrieben wird, der axial dazu ausgerichtet ist.

## Revendications

1. Perceuse-fraiseuse pour usiner des panneaux, comprenant, sur un bâti porteur, une tête de service (1), incluant un moyen d'entraînement pour fournir un entraînement rotatif autour d'un axe vertical (2), un entraînement en translation le long d'un axe horizontal et un autre entraînement en translation le long d'un axe vertical, **caractérisée en ce que** ladite tête de service (5) supporte une pluralité de mandrins de perçage verticaux (3), au moins un mandrin de perçage horizontal (11) étant agencé pour être adjacent aux mandrins de perçage verticaux (3) et étant entraîné par un vérin vertical respectif (10), un corps de fixation (21) étant couplé en rotation, à ladite tête de service et étant conçu pour basculer autour d'un axe horizontal, ledit corps de fixation supportant un mandrin de fraisage, et **en ce que** lesdits mandrins de perçage verticaux (3) supportés par ladite tête (1) sont agencés en une relation d'adjacence, chacun desdits mandrins de perçage verticaux (3) étant entraîné indépendamment par un vérin pneumatique vertical respectif (5) aligné axialement avec celui-ci.
